# EUROPÄISCHE PATENTANMELDUNG

(11) **EP 0 687 555 A2**
(43) Veröffentlichungstag der Anmeldung: **20.12.1995**
(21) Anmeldenummer: 95101968.6
(22) Anmeldetag: 14.02.1995
(51) Int. Cl.: B32B 19/06, E04B 1/94

(54) **Durchbrandblocker für Flugzeugrümpfe**

(30) Priorität: 13.06.1994 DE 4420613
(71) Anmelder: Firma Carl Freudenberg, D-69469 Weinheim (DE)
(72) Erfinder: Schäfer, Werner, D-69488 Birkenau (DE); Schaut, Gerhard, Dr., D-69502 Hemsbach (DE)

(57) **Zusammenfassung**

Ein Durchbrandblocker für Flugzeugrümpfe besteht aus dem Verbund eines 100 bis 600 g/m² schweren Glimmerpapiers mit ein- oder beidseitig hierauf kaschierten, 30 bis 300 g/m² schweren Vliesstoff-Lagen aus miteinander vernadelten, flammhemmenden Fasern. Die klebende Wirkung des Laminats wird durch teilvernetztes, latent klebefähiges, temperaturbeständiges Bindemittel aus dem Glimmerpapier selbst erzeugt. Das Herstellungsverfahren für den Verbund hat zum Inhalt das klebende Verbinden einer oder beider Flächen eines Glimmerpapiers der genannten Art mit je einer Vliesstofflage unter Druck und bei einer Temperatur, welche die Endvernetzung des Bindemittels nicht auslöst.

## Beschreibung

Die Erfindung befaßt sich mit einem Durchbrandblocker für Flugzeugrümpfe und einem Verfahren zu dessen Herstellung.

Bei einem sogenannten post crash fire, das heißt beim Zusammenstoß von Flugzeugen auf dem Boden und Entstehung eines Treibstoffbrandes, ist die Durchbrandzeit eines Flugzeugrumpfes von außen nach innen nur 30 bis 60 Sekunden. Dabei beträgt der Schmelzpunkt der Aluminiumhaut etwa 640°C; brennendes Kerosin erzeugt eine Temperatur von über 1000°C.

Es bestehen derzeit noch keine gesetzlichen Vorschriften, welche das Durchbrandverhalten einer Flugzeugaußenhaut betreffen.

DE-AS 26 05 102 beschreibt einen mehrschichtigen Isolierstoff, bestehend aus mit einem aushärtbaren oder einem ausgehärteten Kunststoff-Bindemittel verbundenen Trägerstoff, Glimmerpapier und einem Abdeckstoff auf der anderen Seite des Glimmerpapiers. Dabei soll die Aufgabe gelöst werden, einen hochtemperaturbeständigen Isolierstoff anzugeben, welcher eine verbesserte Verarbeitungs- und Wickelfähigkeit aufweist und in gewickeltem Zustand eine gleichmäßige Durchimprägnierung mehrerer übereinander angeordneter Lagen zuläßt. Dies wird dadurch erreicht, daß das Bindemittel in einem aus Punkten, Rauten oder Streifen gebildeten Muster angeordnet ist.

Vorzugsweise erfolgt die Zugabe des Härters, und damit die Endvernetzung des vorvernetzten Epoxidharzes, mit dem Imprägniervorgang:
Trägermaterial ist ein Vliesstoff mit musterartig aufgedruckter Haftmasse, welche nach dem Trocknen in vorvernetztem Zustand vorliegt. Hierauf werden Feinglimmerpapier und eine Abdeckbahn aus einem weiteren Vliesstoff mit entsprechendem Haftmassenaufdruck aufeinandergelegt und das Ganze in einem beheizten Kalander innig verbunden.

Diese Version, bei der das Epoxidharz noch nicht endvernetzt ist, wird nun zu einem fertigen Isolierkörper mit Hohlräumen gewickelt, wobei die Glimmerplättchen nicht brechen. Dieser Hohlkörper wird durchdringend imprägniert mit einem Isolierharz, welchem ein für das Bindemittel geeigneter Härter zugesetzt ist. Hierdurch erfolgt während des Durchimprägnierens gleichzeitig die Endhärtung des auf den Vliesstoff musterartig aufgebrachten Epoxidharzes.

In einer anderen, nichtgewickelten Version ist das Kunststoff-Bindemittel des Isolierstoffs bereits ausgehärtet.

Die erste Version eignet sich wegen ihrer geometrischen Form als Wickelkörper nicht zum Einbau in Flugzeugrümpfe. Die zweite Version ist wegen des ausgehärteten Bindemittels derart steif, daß die baulichen Unebenheiten von Flugzeugrümpfen nicht vollflächig überdeckt werden können.

Dieser Stand der Technik ist daher zur Erhöhung der Durchbrandzeit von Flugzeugrümpfen nicht geeignet.

DE-OS 27 00 608 befaßt sich mit einem nichtbrennbaren Verbund-Dämmstoff aus einer Kernschicht A und zwei Deckschichten B. Die Kernschicht A enthält anorganische Leitpartikel, welche miteinander verbunden sind durch 1 bis 30 Gew.-% eines temperaturbeständigen, hochmolekularen Bindemittels mit einer Dauergebrauchstemperatur nach DIN 53 446 von mehr als 100°C. Die beiden Deckschichten B stellen ein flächiges Trägermaterial aus miteinander verbundenen anorganischen oder organischen Fasern oder Drähten dar, welche ebenfalls mit 3 bis 30 Gew.-% des genannten Bindemittels verbunden sind.

Ein solcher Dämmstoff ist wegen des hohen Bindemittelgehalts in allen Schichten sehr steif und vermag sich nicht vollflächig an konturierte Gegenflächen, wie sie im Flugzeugrumpf zahlreich vorhanden sind, anzuschmiegen; das vollständig ausgehärtete Bindemittel ist für die Steifigkeit des VerbundDämmstoffs verantwortlich.

Der Wunsch der Flugzeugindustrie besteht in einer Erhöhung der Durchbrandzeit auf 3 bis 4 min, um die Chance für entsprechende Rettungsmaßnahmen zu erhöhen. Dies kann insbesondere mit Hilfe des Einbaus von Druchbrandblocker-Schichten in die Flugzeugaußenhaut-Konstruktion erfolgen, wobei aus verarbeitungstechnischen Gründen diese Schichten weich und flexibel sein müssen, um den Unebenheiten der Flugzeugrumpf-Konstruktion anpaßbar zu sein.

Die Lösung dieser Aufgabe besteht in einem Durchbrandblocker gemäß dem ersten Patentanspruch. Seine Herstellung wird im ersten Verfahrensanspruch beschrieben; jeweils vorteilhafte Ausgestaltungen in Produkt und Verfahren sind durch die Unteransprüche gekennzeichnet.

Der erfindungsgemäße Durchbrandblocker ist also ein mehrschichtiges Flächengebilde und besteht aus dem Verbund eines 100 bis 600 g/m² schweren Glimmerpapiers mit ein- oder beidseitig hierauf kaschierten, 30 bis 300 g/m² schweren Vliesstoff-Lagen. Der Vliesstoff ist dabei jeweils aus flammhemmenden Fasern aufgebaut, welche einen LOI von 20 bis 55 besitzen. Solche flammhemmenden oder "schwer entflammbaren" Fasern sind ausführlich beschrieben in Melliand Textilberichte 6/1987, 396 bis 401. Der Bericht umfaßt zahlreiche organische und anorganische Faserstoffe und nennt deren LOI-Werte. Dieser "Limiting-Oxygen-Index" bestimmt die Brennbarkeit von Kunststoffen gemäß ISO 4589, "Kunststoffe - Bestimmung der Brennbarkeit durch den Oxygen-Index", und ist mit gewissen Einschränkungen auch auf Textilien anwendbar, sofern diese aus organischen Faserstoffen bestehen. Wirksames flammhemmendes Verhalten ist in unserer Atmosphäre bei LOI-Werten über etwa 27 zu erwarten.

Glimmerpapier ist bekannt und besteht aus kleinsten Glimmerplättchen, welche miteinander und mit dem Träger aus Papierfasern oder Textilfasern durch ein Bindemittel verbunden sind.

Gemäß der Erfindung ist dieses Bindemittel teilvernetzt und noch latent klebefähig, das heißt, es besteht aus einer polymeren Masse, welche in einem Zwischenstadium der Polymerisation zwar die Glimmerplättchen untereinander und mit dem Träger klebend verbindet, jedoch vor einer durch Energieeinwirkung initiierten Endvernetzung noch klebende Eigenschaften aufweist.

Das Bindemittel ist gemäß der Erfindung in einer Menge von 20 bis 30% des Glimmerpapiergewichts vorhanden und wirkt daher auch auf mindestens einer Fläche des Glimmerpapiers noch klebend.

Ferner muß dieses Bindemittel eine Dauergebrauchstemperatur nach DIN 53 446 von mehr als 100°C besitzen, um bei Brandeinwirkung nicht als erstes zerstört zu werden.

Die genannte Klebefähigkeit des teilvernetzten Bindemittels nach außen hält ein- oder beidseitig des Glimmerpapiers jeweils die 30 bis 300 g/m² schwere Vliesstoff-Lage sicher fest.

Aus den verschiedenen Glimmertypen haben sich Phlogopit und Muskovit als besonders hitzeresistent erwiesen.

Zweckmäßig einzusetzende Vliesstoff-Fasern bestehen beispielsweise aus m- und p-Aramid, Phenol, oxidiertem Polyacrylnitril, Polybenzimidazol oder Melamin.

Der Zusammenhalt der Fasern ist allein durch Vernadeln gewährleistet. Dies kann durch Nadelstühle oder durch hochenergetische Wasserstrahlen erfolgen.

Das Glimmerpapier ist zweckmäßig dann beidseitig mit Vliesstoff beschichtet, wenn eine besonders hohe Schalldämmung gewünscht wird, oder wenn die wenig abriebfeste Glimmerpapierschicht bei der Verarbeitung des Verbundes besonders geschützt werden soll.

Vorteilhafte, latent klebefähige Bindemittel für die erfindungsgemäßen Laminate stellen die an sich bekannten Polykondensate, Polyesterimide, Polyamidimide oder stark vernetzte Melamin/Formaldehyd- oder Phenol/Formaldehyd-Harze dar, sofern sie die Dauergebrauchstemperatur von 100°C nach DIN 53 446 nicht unterschreiten. Besonders geeignet sind Silikonharze.

Die flammhemmende Wirkung des Laminats kann noch erhöht werden, wenn eine Seite des Glimmerpapiers mit dem Vliesstoff, die andere Seite mit einer Aluminiumbeschichtung versehen ist. Zweckmäßig wird diese Al-Reflexionsschicht bezüglich der Flugzeughaut nach außen weisen.

Die flammhemmende Wirkung der Vliesstoff-Fasern kann noch dadurch erhöht werden, daß der Vliesstoff mit Vermikulit, einem überalterten Glimmer, imprägniert oder auf seinen Oberflächen beschichtet ist.

Vorteilhafterweise ist der Durchbrandblocker-Verbund zur Montage und Fixierung im Flugzeugrumpf ein- oder beidseitig mit einem selbsthärtenden Klebstoff ausgerüstet, dessen Aktivierungstemperatur mindestens der Endvernetzungstemperatur des genannten Bindemittels im Laminat entspricht.

Beispiele solcher Klebstoffe werden in den folgenden Ausführungen angegeben.

Im Rahmen der Erfindung ist es auch möglich, einen selbstklebend wirkenden Klebstoff entsprechend zu verwenden, wobei dann dessen Aktivierung selbstverständlich entfällt.

Die Herstellung des Glimmerpapiers an sich ist bekannt und wird durch Spezialfirmen ausgeführt: Dabei legt man im Prinzip eine Glimmerpulpe über eine Langsiebmaschine zu Glimmerpapier auf einem Träger ab. Die Verbindung der Glimmerteilchen untereinander und mit dem Träger, hier ein dünnes Fasermaterial, erfolgt durch ein Kunstharz-Bindemittel, welches teilvernetzt wird und danach noch latent klebefähige Eigenschaften bis zu den Oberflächen des Glimmerpapiers besitzt. Hierfür zweckmäßige Bindemittel wurden bereits in der Beschreibung genannt.

Das fertige Glimmerpapier weist eine Flächenmassen von 100 bis 600 g/m² auf; als Glimmer wird Phlogopit oder Muskovit ausgewählt.

Die Teilvernetzung des Bindemittels erfolgt durch Wärme, wobei Datenblätter für die jeweiligen Bindemittel genaue Angaben liefern.

Ein flammhemmender Vliesstoff der eingangs genannten Art wird nun ein- oder beidseitig auf das Glimmerpapier unter Druck kaschiert, wobei das Bindemittel des Glimmerpapiers als Klebemedium wirkt. Dabei muß lediglich darauf geachtet werden, daß die einwirkende Temperatur nicht zur vollständigen Vernetzung des Bindemittels führt. Erfindungsgemäß darf dieser Vorgang erst beim Einbau des Laminats in den Flugzeugrumpf erfolgen.

Die Fixierung des Verbundes mit dem Flugzeugrumpf erfolgt vorzugsweise durch ein- oder beiderseits des Verbundes aufgebrachten, selbsthärtenden Klebstoff, zweckmäßig z.B. auf Basis von Silikon-, Acrylat- oder Epoxidharzen.

Diese Klebstoffe werden beim Verarbeiten in der Hitze aktiviert; die erforderliche Wärmeeinwirkung, welche ebenfalls entsprechenden Datenblättern zu entnehmen ist, initiiert dabei nicht nur die Verklebung mit der Außenhaut des Flugzeugs, sondern auch die Endvernetzung des Bindemittels, welches den Zusammenhalt des Durchbrandblockers gewährleistet, wenn man eine Auswahl dergestalt trifft, daß die zur Aktivierung erforderliche Temperatur größer oder gleich der Endvernetzungstemperatur des Bindemittels ist.

Für den Fall, daß man den Verbund ein- oder beidseitig mit einem selbstklebenden Klebstoff ausrüstet, entfallen natürlich diese Temperaturvorgaben. Dieser Klebstoff darf nur nicht durch die Aktivierungshitze zerstörbar sein.

Insbesondere bei einer zweischichtigen Version des erfindungsgemäßen Durchbrandblockers ist es vorteilhaft, nach dem Beschichten des Glimmerpapiers mit dem Vliesstoff die freie Fläche der Glimmerpapierschicht mit einer Aluminiumschicht zu bedampfen. Dies kann beispielsweise durch Sputtern erfolgen.

Man kann den Vliesstoff noch flammfester ausgestalten, d.h. die Durchbrandzeit verlängern, wenn man ihn vor der Laminierung mit einer Vermikulitsuspension imprägniert oder seine Oberflächen damit beschichtet. Dabei verwendet man rund 100 Prozent Vermikulit, bezogen auf das Vliesstoffgewicht. Ein solchermaßen imprägnierter Vliesstoff erfüllt dann allein bereits die Forderungen hinsichtlich des Brandverhaltens nach DIN 5510, Klasse S 5, sowie nach FAR 25.853 b.

Der Durchbrandblocker gewährleistet durch seinen erfindungsgemäßen Aufbau eine für die Verarbeitung im Flugzeugrumpf vorteilhafte Flexibilität, wobei Unebenheiten problemlos überdeckt werden können. Insbesondere bei dreischichtigen Versionen des Durchbrandblockers ist es durchaus möglich, bautechnisch bedingte Unebenheiten in den zu bearbeitenden Flächen auszugleichen.

Prinzipiell sind zwei Möglichkeiten der Verarbeitung gegeben:
1. Das Aufkleben des Durchbrandblocker-Verbundes direkt auf die Innenseite der metallischen Außenhaut des Flugzeugrumpfes. Dabei sollte bei zweischichtigen Laminaten die Glimmerseite gegen das Aluminium gerichtet sein.
2. Das Aufkleben auf die Seitenwand der Flugzeugkabine als Bestandteil der dort ohnehin vorhandenen Sekundärisolierung. Darauf kann dann die Standardisolierung, z.B. Mineralwolle, aufgebracht werden.

Der Vliesstoff des erfindungsgemäßen Laminats trägt auch zu einer Verbesserung der schalldämmenden Wirkung der Außenhaut bei.

Insbesondere wird jedoch das Brandverhalten dergestalt verbessert, daß die Durchbrandzeit mindestens drei Minuten beträgt.

## Patentansprüche

1. Durchbrandblocker für Flugzeugrümpfe, bestehend aus dem Verbund (Laminat) eines 100 bis 600 g/m² schweren Glimmerpapiers mit einoder beidseitig hierauf kaschierten, 30 bis 300 g/m² schweren Vliesstoff-Lagen aus miteinander vernadelten, flammhemmenden Fasern, welche einen LOI von 20 bis 55 aufweisen, wobei die klebende Verbindung Glimmerpapier/Vliesstoff jeweils mittels eines teilvernetzten, noch latent klebefähigen Bindemittels besteht, welches Bestandteil des Glimmerpapiers selbst ist, wobei das Bindemittel eine Dauergebrauchstemperatur nach DIN 53 446 von mehr als 100°C besitzt und 20 bis 30 Gew.-% des Glimmerpapiers ausmacht, wobei das Bindemittel auch auf der jeweils mit dem Vliesstoff verbundenen Fläche des Glimmerpapiers in klebewirksamer Menge vorhanden ist und wobei der Glimmerbestandteil vom Typ Phlogopit oder Muskovit ist.

2. Durchbrandblocker nach Anspruch 1, dadurch gekennzeichnet, daß der Verbund ein- oder beidseitig mit einem mindestens bei der Endvernetzungstemperatur des Bindemittels wärmeaktivierbaren, selbsthärtenden Klebstoff ausgerüstet ist.

3. Durchbrandblocker nach Anspruch 1 oder 2, dadurch gekennzeichnet, daß das latent klebefähige Bindemittel ein Polykondensat, ein Polyesterimid, ein Polyamidimid, ein stark vernetztes Melamin/Formaldehyd- oder Phenol/Formaldehyd-Harz oder ein Silikonharz ist.

4. Durchbrandblocker nach Anspruch 1 bis 3, dadurch gekennzeichnet, daß eine Glimmerpapier-Fläche eine Aluminiumbeschichtung aufweist.

5. Durchbrandblocker nach einem oder mehreren der vorhergenannten Ansprüche, dadurch gekennzeichnet, daß der Vliesstoff mit Vermikulit imprägniert und auf seinen Flächen beschichtet ist.

6. Verfahren zur Herstellung eines Durchbrandblockers für Flugzeugrümpfe mit den Schritten:
- Herstellung eines Glimmerpapiers mit einer Flächenmasse von 100 bis 600 g/m² aus Phlogopit oder Muskovit in an sich bekannter Weise, wobei man für die Bindung der Glimmerteilchen ein teilvernetztes Kunstharz-Bindemittel verwendet, welches nach der Herstellung des Glimmerpapiers auf dessen Oberflächen noch latent klebefähig und nicht endvernetzt ist, wobei man 20 bis 30% des Glimmerpapiergewichts eines Bindemittels verwendet, welches eine Dauergebrauchstemperatur nach DIN 53 446 von mehr als 100°C besitzt,
- klebendes Verbinden einer oder beider Seiten des Glimmerpapiers mit 30 bis 300 g/m² schwerem, genadeltem Vliesstoff aus flammhemmenden, einen LOI von 20 bis 55 aufweisenden Fasern, unter Ausnutzung der Klebewirkung des Bindemittels, mit Druck und einer nicht zur weiteren Vernetzung des Bindemittels führenden Temperatur.

7. Verfahren nach Anspruch 6, dadurch gekennzeichnet, daß man nach dem einseitigen Beschichten des Glimmerpapiers mit dem Vliesstoff die freie Fläche des Glimmerpapiers mit einer Aluminiumschicht bedampft.

8. Verfahren nach Anspruch 6 oder 7, dadurch gekennzeichnet, daß man vor dem Beschichten mit dem Vliesstoff diesen mit einer wäßrigen Suspension aus Vermikulit tränkt oder beidseitig beschichtet und dann das Suspensionsmittel abzieht.
